# EUROPÄISCHE PATENTANMELDUNG

(11) **EP 1 817 995 A2**
(43) Veröffentlichungstag der Anmeldung: **15.08.2007**
(21) Anmeldenummer: 06026361.3
(22) Anmeldetag: 19.12.2006
(51) Int. Cl.: A47J 42/04

(54) **Mühle zum Zerkleinern von Kaffeebohnen**

(30) Priorität: 08.02.2006 DE 202006001986 U
(71) Anmelder: STOHA DESIGN RICHARD HIEBER KG, 86928 Hofstetten (DE)
(72) Erfinder: Ellerstorfer, Thomas, 93413 Cham (DE)
(74) Vertreter: Jordan, Volker Otto Wilhelm

(57) **Zusammenfassung**

Die Erfindung betrifft eine Mühle zum Zerkleinern von Kaffeebohnen, umfassend ein Gehäuse (12) mit einem oberen und einem unteren Gehäuseteil (14, 16), welche miteinander in Verbindung stehen oder verbindbar sind; einen im oberen Gehäuseteil (14) ausgebildeten Vorratsbehälter (18) für ungemahlene Kaffeebohnen; einen im unteren Gehäuseteil (16) ausgebildeten oder in diesem aufgenommenen oder aufnehmbaren Aufnahmebehälter (24) für gemahlenen Kaffee; einen dem oberen Gehäuseteil (14) zugeordneten, den Vorratsbehälter (18) auf seiner Oberseite lösbar verschließenden Deckel (20); ein im oberen Gehäuseteil (14) aufgenommenes, drehbar angeordnetes und eine Drehachse (D) definierendes Stabelement (26); ein oberhalb des Deckels (20) vorgesehenes Kurbelelement (28), welches mit dem Stabelement (26, 56) zur gemeinsamen Drehung gekoppelt oder koppelbar ist; ein im Gehäuse (12) oberhalb oder in einem oberen Bereich des Aufnahmebehälters (24) angeordnetes Mahlwerk (40) mit wenigstens zwei relativ zueinander beweglichen Mahlelementen (42, 44), von denen wenigstens eines (42) vermittels des Stabelements (26, 46) relativ zu wenigstens einem anderen der Mahlelemente (44) verdrehbar ist. Hierbei wird erfindungsgemäß vorgeschlagen, dass das Gehäuse (12) einen Haltebereich (22) in Form einer Gehäuseverengung aufweist, die in einem mittleren Axialbereich des Gehäuses (12) oberhalb des Aufnahmebehälters (24) angeordnet und derart ausgestaltet ist, dass die Mühle (10) an der Gehäuseverengung einhändig greifbar und festhaltbar ist.

## Beschreibung

Die vorliegende Erfindung betrifft eine Mühle zum Zerkleinern von Kaffeebohnen, umfassend: ein Gehäuse mit einem oberen und einem unteren Gehäuseteil, welche miteinander in Verbindung stehen oder verbindbar sind; einen im oberen Gehäuseteil ausgebildeten Vorratsbehälter für ungemahlene Kaffeebohnen; einen im unteren Gehäuseteil ausgebildeten oder in diesem aufgenommenen oder aufnehmbaren Aufnahmebehälter für gemahlenen Kaffee; einen dem oberen Gehäuseteil zugeordneten, den Vorratsbehälter auf seiner Oberseite lösbar verschließenden Deckel; ein im oberen Gehäuseteil aufgenommenes, drehbar angeordnetes und eine Drehachse definierendes Stabelement; ein oberhalb des Deckels vorgesehenes Kurbelelement, welches mit dem Stabelement zur gemeinsamen Drehung gekoppelt oder koppelbar ist; ein im Gehäuse oberhalb oder in einem oberen Bereich des Aufnahmebehälters angeordnetes Mahlwerk mit wenigstens zwei relativ zueinander beweglichen Mahlelementen, von denen wenigstens eines vermittels des Stabelements relativ zu wenigstens einem anderen der Mahlelemente verdrehbar ist.

Solche mittels des Kurbefelements manuell bedienbare Kaffeemühlen weisen traditionellerweise eine Gehäuseform auf, welche das Festhalten der Kaffeemühle mit der einen Hand bei gleichzeitiger Drehung der Kurbel mit der anderen Hand durch eine Bedienperson sehr schwierig macht. Insbesondere bei Kaffeemühlen, mit denen größere Mengen gemahlenen Kaffees hergestellt werden sollen, sind kubusartige Gehäuse weit verbreitet, welche beim Mahlen nur schlecht mit einer Hand festgehalten werden können. Solche bekannten Kaffeemühlen werden daher von einer Bedienperson häufig im Sitzen bedient, und durch Festklemmen zwischen den Beinen fixiert.

Aufgabe der Erfindung ist es demgegenüber, eine gattungsgemäße Mühle derart weiterzubilden, dass ihre Handhabung verbessert ist.

Hierzu schlägt die Erfindung vor, dass bei einer gattungsgemäßen Mühle zum Zerkleinern von Kaffeebohnen das Gehäuse einen Haltebereich in Form einer Gehäuseverengung aufweist, die in einem mittleren Axialbereich des Gehäuses oberhalb des Aufnahmebehälters angeordnet und derart ausgestaltet ist, dass die Mühle an der Gehäuseverengung einhändig greifbar und festhaltbar ist.

Durch die Ausbildung einer Verengung, beispielsweise in Form einer Taillierung, kann die Mühle von einer Bedienperson (es wird hier von einer erwachsenen Person durchschnittlicher Größe ausgegangen) mit einer Hand umgriffen werden, um sie beim Mahlvorgang ausreichend stabilisieren zu können. Dies ermöglicht insbesondere auch das Festhalten der Kaffeemühle, wenn diese beim Mahlen auf einer Auflagefläche, beispielsweise einem Tisch oder einer Küchenarbeitsplatte, steht, auf ergonomische Art und Weise, da der Mahlvorgang nicht in einer gebückten Stellung im Sitzen ausgeführt werden muss, wie bei bekannten Mühlen, die zwischen den Beinen eingeklemmt werden. Ferner kann durch die Ausbildung der Verengung die Kaffeemühle auch einhändig ergriffen werden, insbesondere wenn sie beispielsweise vor ihrer Verwendung von einer Bedienperson aus einem Regal oder Schrank hervorgenommen wird und nach dem Mahlvorgang wieder weggeräumt wird.

Bevorzugt weist der obere Gehäuseteil den Haltebereich einstückig auf oder der obere Gehäuseteil ist mehrteilig ausgeführt, vorzugsweise mit einem oberen Vorratsbehälterteil und einem unteren Haltebereichsteil.

Hierbei kann der Haltebereich einen unteren Abschnitt des Vorratsbehälters bilden oder zwischen dem Aufnahmebehälter und dem Vorratsbehälter angeordnet sein.

Um die Kaffeemühle beim Mahlen in dem Bereich fixieren zu können, in dem aufgrund des Mahlvorgangs große Kräfte wirken, wird vorgeschlagen, dass das Mahlwerk in axialer Richtung im Wesentlichen innerhalb des mittleren Axialbereichs im Gehäuseinneren oder anschließend an den mittleren Axialbereich im Aufnahmebehälter angeordnet ist.

Auf diese Weise ist das Mahlwerk im Bereich des Haltebereichs angeordnet, so dass die im Mahlwerk beim Zerkleinern von Kaffeebohnen auftretenden Kräfte im Wesentlichen direkt auf die die Kaffeemühle im Haltebereich umgreifende Hand übertragen und somit vom Anwender aufgenommen werden können.

Gemäß einer bevorzugten Weiterbildung sind der obere Gehäuseteil und der untere Gehäuseteil miteinander gekoppelt oder koppelbar, vorzugsweise durch eine gewindeartige Verbindung oder einen Bajonettverschluss. Hierbei ist es besonders bevorzugt, dass der untere Gehäuseteil den Aufnahmebehälter bildet.

Eine solche Kopplung der beiden Gehäuseteile ermöglicht einerseits eine stabile Verbindung zwischen den beiden Gehäuseteilen und andererseits die einfache und leichtgängige Entfernung des Aufnahmebehälters, um den gemahlenen Kaffee weiter verwenden zu können. Bei abgenommenem Gehäuseunterteil ist auch der Zugang von unten zum oberen Gehäuseteil freigelegt, so dass das Mahlwerk beispielsweise mit einem Pinsel gereinigt werden kann.

Neben einer solchen zweiteiligen Ausbildung kann aber auch daran gedacht werden, den oberen Gehäuseteil und den unteren Gehäuseteil einstückig miteinander auszubilden, wobei in einem solchen Fall der Aufnahmebehälter im unteren Gehäuseteil schubfachartig ausgebildet ist.

Damit die Mühle im Haltebereich sicher gehalten werden kann, ist es bevorzugt, dass der Haltebereich auf seiner Außenoberfläche derart ausgebildet ist, vorzugsweise durch eine Profilierung des Haltebereichs oder durch eine Beschichtung insbesondere mit einem Elastomer, dass die Mühle im Wesentlichen rutschfest ergreifbar und festhaltbar ist.

Je nach Wahl der Profilierung oder/und der Beschichtung können durch die Ausbildung der Außenoberfläche des Haltebereichs auch gestalterische Aspekte im Hinblick auf ein ansprechendes Design der Kaffeemühle berücksichtigt werden.

Damit der Füllstand mit ungemahlenen Kaffeebohnen im Vorratsbehälter einfach ersichtlich ist, wird vorgeschlagen, dass der Vorratsbehälter, insbesondere der Vorratsbehälterteil, aus einem durchsichtigen oder halbdurchsichtigen Material, vorzugsweise einem Kunststoff, hergestellt ist.

Um das Umgreifen des Haltebereichs möglichst ergonomisch zu gestalten und um der Kaffeemühle ein ansprechendes Äußeres zu geben, ist es besonders bevorzugt, dass das Gehäuse bezogen auf die Drehachse im Wesentlichen rotationssysmmetrisch ausgeführt ist.

Dabei wird weiterbildend vorgeschlagen, dass der obere Gehäuseteil einen über seine axiale Erstreckung sich kontinuierlich verändernden Durchmesser bezogen auf die Drehachse ausweist.

Hierbei ist es besonders bevorzugt, dass der Durchmesser des oberen Gehäuseteils ausgehend von einem maximalen Durchmesser in einem oberen Gehäusebereich in Richtung zur Gehäuseverengung abnimmt und kontinuierlich in einen sich verändernden Durchmesser im Bereich der Gehäuseverengung übergeht.

In diesem Zusammenhang wird ferner vorgeschlagen, dass der untere Gehäuseteil einen über seine axiale Erstreckung sich kontinuierlich verändernden Durchmesser bezogen auf die Drehachse aufweist.

Hierbei ist es besonders bevorzugt, dass der Durchmesser des unteren Gehäuseteils ausgehend von einem maximalen Durchmesser in einem unteren Gehäusebereich in Richtung zur Gehäuseverengung abnimmt und kontinuierlich in einen sich verändernden Durchmesser im Bereich der Gehäuseverengung übergeht.

Dabei kann der Durchmesser des unteren Gehäuseteils weiterhin ausgehend von seinem maximalen Durchmesser in Richtung zu einem Boden des unteren Gehäuseteils abnehmen.

Um eine gut ergreifbare und festhaltbare Gehäuseverengung auszubilden, ist es bevorzugt, dass der sich verändernde Durchmesser im Bereich der Gehäuseverengung bezogen auf die Drehachse ausgehend von einem Minimaldurchmesser sowohl in Richtung zum oberen Gehäuseteil, als auch in Richtung zum unteren Gehäuseteil kontinuierlich zunimmt. Hierdurch wird eine Taillierung geschaffen, welche ein angenehmes Umgreifen ermöglicht und eine optisch ansprechende Formgebung ermöglicht.

Um den Aufbau und die Handhabung der Kaffeemühle zu vereinfachen, wird weiterbildend, aber auch unabhängig vorgeschlagen, dass der Deckel derart ausgebildet ist, dass das Stabelement bezüglich des Gehäuses in radialer Richtung zur Drehachse durch den Deckel abgestützt oder abstützbar ist, wobei der Deckel eine Durchgangsöffnung für das Stabelement aufweist, durch die das Stabelement radial im Wesentlichen spielfrei gelagert oder lagerbar ist.

Aufgrund einer solchen radialen Lagerung des Stabelements durch den Deckel ist keine gesonderte Stützkonstruktion für das Stabelement notwendig, wie dies bei bekannten Kaffeemühlen durch beispielsweise drei von der Gehäuseinnenwand zum Stabelement radial verlaufende und um das Stabelement miteinander verbundene Streben erreicht wird. Dies vereinfacht den Gesamtaufbau der Mühle.

Zur Kraftübertragung der beim Mahlen vom Deckel aufgenommenen Kräfte auf das Gehäuse wird vorgeschlagen, dass der Deckel an seinem Umfang auf dem oberen Gehäuseteil radial und in der zum Mahlwerk weisenden Richtung axial abgestützt oder abstützbar ist.

Um dem Deckel zur radialen Abstützung des Stabelements die nötige Steifigkeit zu geben, ist es bevorzugt, dass der Deckel aus einem Metall, insbesondere Edelstahl, hergestellt ist.

Um die Kurbel einfach vom Stabelement entfernen zu können, wird weiterbildend, aber auch unabhängig vorgeschlagen, dass das Stabelement einen mit der Kurbel verbundenen Stababschnitt aufweist, der lösbar mit einem mit dem Mahlwerk verbundenen Stababschnitt drehfest gekoppelt oder koppelbar ist.

Hierbei ist es besonders bevorzugt, dass der mit der Kurbel verbundene Stababschnitt auf den mit dem Mahlwerk verbundenen Stababschnitt aufsteckbar ist, wobei die beiden Stababschnitte vorzugsweise miteinander in lösbarem Verrastungseingriff stehen.

Durch eine solche Steckverbindung zwischen den zwei Stababschnitten kann die Verbindung zwischen der Kurbel und dem ihr zugeordneten Stabelement sehr stabil ausgebildet werden, beispielsweise durch Verschweißen oder durch einstückige Ausbildung als Gussteil oder dergleichen, so dass die in diesem Übergangsbereich zwischen Stabelement und Kurbel beim Mahlen auftretenden Torsionskräfte aufgenommen werden können, ohne dass die Gefahr besteht, dass sich die Kurbel vom Stabelement löst. Es kann auch daran gedacht werden, dass der mit der Kurbel verbundene Stababschnitt und der Deckel derart ausgebildet sind, beispielsweise durch einen am Stababschnitt umlaufenden Vorsprung, dass durch alleiniges Ziehen am Stababschnitt bzw. an der damit verbundenen Kurbel, die Kurbel, der Stababschnitt und der Deckel in einem Schritt zusammen vom oberen Gehäuseteil abnehmbar sind.

Selbstverständlich können zur Herstellung des oberen und des unteren Gehäusebehälters gleiche oder unterschiedliche Materialien verwendet werden, wobei auch Kombinationen von unterschiedlichen Materialien, beispielsweise Metall und Kunststoff oder Holz und Metall oder dergleichen denkbar sind.

Die Erfindung wird nachfolgend anhand einer Ausführungform beispielhaft und nicht einschränkend beschrieben.
- Fig. 1: zeigt eine Mühle zum Zerkleinern von Kaffeebohnen in einer schematischen seitlichen Aufrissdarstellung.
- Fig. 2: zeigt einen Querschnitt entlang der Linie II-II der Fig. 1.

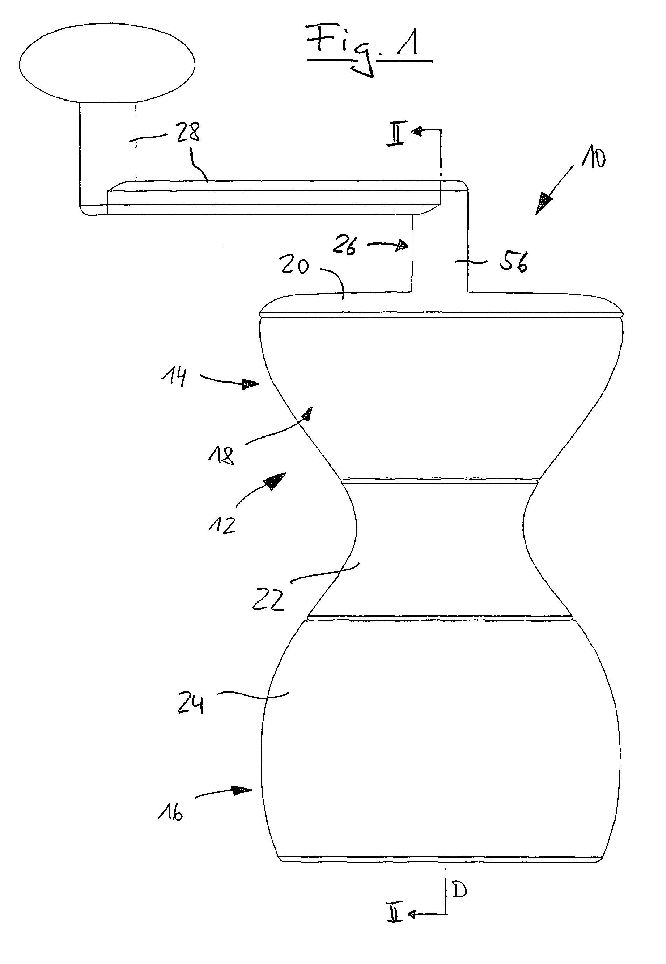

Die in Fig. 1 dargestellte Kaffeemühle 10 umfasst ein Gehäuse 12, mit einem oberen Gehäuseteil 14 und einem unteren Gehäuseteil 16, welche in dieser Darstellung miteinander verbunden sind. Im oberen Gehäuseteil 14 ist ein Vorratsbehälter 18 ausgebildet, der durch einen Deckel 20 verschlossen ist. An den Vorratsbehälter 18 schließt sich kontinuierlich ein eine Verengung bzw. Taillierung aufweisender Haltebereich 22 an, an dem die Kaffeemühle 10 durch eine Bedienperson mit einer Hand umgriffen und festgehalten werden kann. Am bezogen auf die Zeichnung unteren Ende des Haltebereichs 22, ist ein Aufnahmebehälter 24, der den unteren Gehäuseteil 16 bildet, mit dem oberen Gehäuseteil 14 gekoppelt, wobei die Kopplung durch einen Bajonettverschluss erreicht wird. Ferner ist in dieser Darstellung ein eine Drehachse D definierendes Stabelement 26 mit seinem Stababschnitt 56 ersichtlich, der oben aus dem Deckel 20 hervorsteht und mit einer Kurbel 28 verbunden ist.

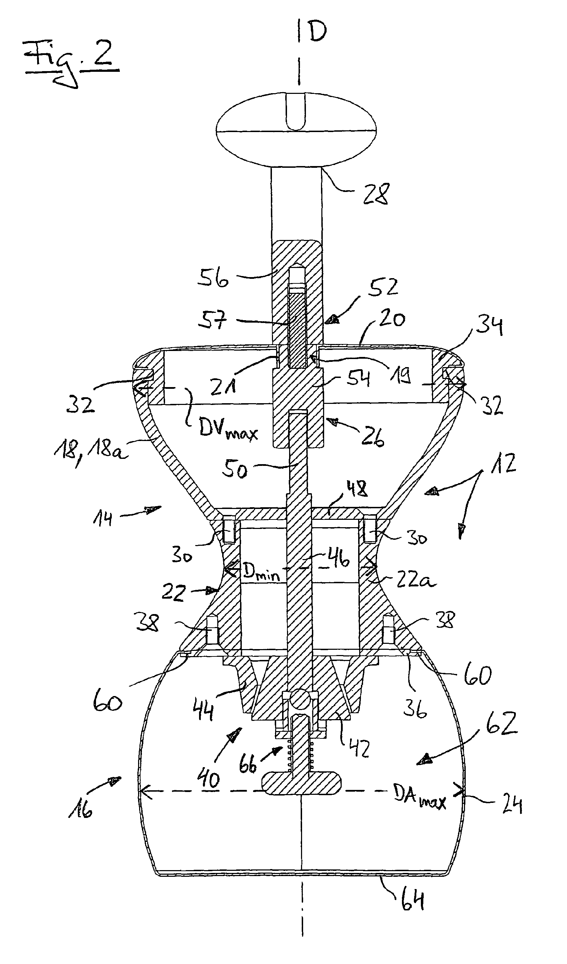

In der Fig. 2 ist die Kaffeemühle 10 in einer Querschnittsdarstellung entlang der Linie II-II dargestellt, wobei die Schnittebene orthogonal zur Papierebene der Fig. 1 gewählt ist. Aus dieser Darstellung ist ersichtlich, dass der obere Gehäuseteil 14 mehrteilig ausgebildet ist, und zwar aus einem oberen Vorratsbehälterteil 18a und einem mit diesem mittels Schrauben 30 verbundenen Haltebereichsteil 22a. Auf den Vorratsbehälterteil 18a ist der Deckel 20 vermittels eines Bajonettverschlusses 32 lösbar befestigt. Der Deckel 20 umfasst in dieser Ausführungsform ferner einen umlaufenden Stehring 34, der vorzugsweise aus Kunststoff hergestellt ist. Der den Vorratsbehälterteil 18a nach oben abschließende Deckel 20 ist vorzugsweise aus Edelstahl hergestellt. Damit der Füllgrad mit ungemahlenen Kaffeebohnen für einen Anwender ersichtlich ist, ist der Vorratsbehälterteil 18a vorzugsweise aus einem durchsichtigen oder halb durchsichtigen Kunststoff hergestellt.

An der Unterseite des Haltebereichsteils 22a ist eine Lagerplatte 36 mittels Schrauben 38 befestigt, wobei an dieser Lagerplatte ein Mahlwerk 40 angebracht ist. Das Mahlwerk 40 umfasst zwei relativ zueinander bewegliche Mahlelemente 42, 44, wobei das Mahlelement 42 drehfest mit einer dem Stabelement 26 zugeordneten Mahlwerkwelle 46 verbunden ist. Diese Mahlwerkwelle 46 erstreckt sich vom Mahlwerk 40 durch den Haltebereichsteil 22a hindurch in den Vorratsbehälterteil 18a, wobei die Mahlwerkwelle 46 durch Verstrebungen 48 im Bodenbereich des Vorratsbehälterteils 18a radial geführt ist. Die Mahlwerkwelle 46 weist an ihrem oberen Ende einen vorzugsweise als. Vierkantprofil ausgeführten Abschnitt 50 auf, der mit einem mit der Kurbel 28 verbundenen Stababschnitt 52 zusammensteckbar ist. Der Stababschnitt 52 umfasst in dieser Ausführungsform einen Adapter 54, der auf die Mahlwerkwelle 46 aufgesteckt ist, und den einstückig mit der Kurbel ausgebildeten Stababschnitt 56, wobei dieser Stababschnitt 56 drehfest mit dem Adapter 54 verbunden ist, vorzugsweise durch eine Gewindeverbindung 57. Der Adapter 54 weist einen radialen Vorsprung 58 auf, auf dem der Deckel 20 mittels eines eine Öffnung 19 bildenden, axial verlaufenden Ringabschnitts 21 abgestützt ist. Der Ringabschnitt 21 des Deckels 20 überträgt die beim Betätigen der Kurbel und der Verdrehung des Stabelements 26 auftretenden Kräfte über den Adapter 54, den Deckel 20 und den Stehring 34 auf den Vorratsbehälterteil 18a. Der Deckel 20 weist somit sowohl eine Abdeckfunktion für den Vorratsbehälterteil 18a als auch eine Abstützfunktion für das Stabelement 26 auf, das in dieser Ausführungsform von der Mahlwerkwelle 46, dem Adapter 54 und dem Stababschnitt 56 gebildet ist, die alle miteinander drehfest koppelbar oder gekoppelt sind.

Der Aufnahmebehälter 24 ist mittels eines Bajonettverschlusses 60 mit der Lagerplatte 36 verbunden, so dass bei am Haltebereichsteil 22a festgemachtem Aufnahmebehälter 24 ein geschlossener Aufnahmeraum 62 für gemahlenen Kaffee gebildet ist. Nach einem Mahlvorgang kann der Aufnahmebehälter 24 durch eine leichte Verdrehung relativ zum oberen Gehäuseteil, d. h. zum Haltebereichsteil 22a und dem Vorratsbehälterteil 18a, von diesem gelöst werden, so dass der im Aufnahmeraum 62 vorhandene gemahlene Kaffee beispielsweise in einen Filter einer nicht dargestellten Kaffeemaschine umgeschüttet werden kann. Anschließend kann der Aufnahmebehälter 24 wieder an dem oberen Gehäuseteil 14 befestigt werden.

Der Vollständigkeit halber wird noch darauf hingewiesen, dass das Mahlwerk 40 eine zur Einstellung des Mahlgrads vorgesehene Einstellvorrichtung 66 aufweist, auf die hier aber nicht näher eingegangen wird.

Aus der Darstellung der Fig. 2 ist auch ersichtlich, dass ein Vorrat an ungemahlenen Kaffeebohnen sowohl im Haltebereichsteil 22a als auch im Vorratsbehälterteil 18a aufgenommen werden kann. Der Haltebereichsteil 22a bildet somit einen Teil des gesamten Vorratsbehälters 18.

Wenn die Kaffeemühle 10 mit ungemahlenen Kaffeebohnen befüllt werden soll, wird der Deckel 20 durch Verdrehen relativ zum Vorratsbehälterteil 18a von diesem gelöst und kann dann samt dem Adapter 54, dem Stababschnitt 56 und der damit einstückig verbundenen Kurbel 28 von der Kaffeemühle 10 abgenommen werden, was eine bequeme und einfache Handhabung der Kaffeemühle beim Befüllen mit ungemahlenen Kaffeebohnen und beim anschließenden Wiederverschließen mit dem Deckel 20 ermöglicht.

Es wird darauf hingewiesen, dass das Gehäuse 12, also der Vorratsbehälterteil 18a, der Haltebereichsteil 22a und der Aufnahmebehälter 24, rotationssymmetrisch bezüglich der Drehachse D ausgebildet sind, wobei der Durchmesser des Vorratsbehälterteils 18a von einem maximalen Durchmesser DVₘₐₓ im oberen Bereich in Richtung zum Haltebereichsteil 22a abnimmt und kontinuierlich in den sich verändernden Durchmesser im Haltebereichsteil 22a übergeht. Der Haltebereichsteil 22a weist in einem leicht oberhalb seiner axialen Mitte liegenden Bereich einen minimalen Durchmesser Dₘᵢₙ auf, ausgehend von dem sein Durchmesser sowohl in Richtung zum Vorratsbehälterteil 18a, als auch in Richtung zum Aufnahmebehälter 24 kontinuierlich zunimmt. Der Aufnahmebehälter 24 weist in einem unteren Bereich seinen maximalen Durchmesser DAₘₐₓ auf, wobei dieser Durchmesser sowohl zum Haltebereichsteil 22a hin, als auch in Richtung eines Bodens 64 des Aufnahmebehälters 24 abnimmt. Durch diese sich verändernden Durchmesser der einzelnen Gehäusebauteile 18a, 22a und 24 ergibt sich eine formschöne Gestalt der Kaffeemühle 10, wobei im Haltebereich 22 eine Verengung bzw. Taillierung ausgebildet ist. Diese Taillierung kann einfach und sicher mit einer Hand umgriffen werden, so dass die Kaffeemühle 10 bei Drehbetätigung der Kurbel 28 sicher stabilisiert werden kann. Der die Verengung bildende Haltebereichsteil 22a kann eine nicht dargestellte Beschichtung oder/und Profilierung anweisen, welche das rutschfeste Ergreifen und Festhalten der Kaffeemühle unterstützen, so dass die Handhabung der Kaffeemühle weiter verbessert wird.

## Patentansprüche

1. Mühle zum Zerkleinern von Kaffeebohnen, umfassend:
ein Gehäuse (12) mit einem oberen und einem unteren Gehäuseteil (14, 16), welche miteinander in Verbindung stehen oder verbindbar sind;
einen im oberen Gehäuseteil (14) ausgebildeten Vorratsbehälter (18) für ungemahlene Kaffeebohnen;
einen im unteren Gehäuseteil (16) ausgebildeten oder in diesem aufgenommenen oder aufnehmbaren Aufnahmebehälter (24) für gemahlenen Kaffee;
einen dem oberen Gehäuseteil (14) zugeordneten, den Vorratsbehälter (18) auf seiner Oberseite lösbar verschließenden Deckel (20);
ein im oberen Gehäuseteil (14) aufgenommenes, drehbar angeordnetes und eine Drehachse (D) definierendes Stabelement (26); ein oberhalb des Deckels (20) vorgesehenes Kurbelelement (28), welches mit dem Stabelement (26, 56) zur gemeinsamen Drehung gekoppelt oder koppelbar ist;
ein im Gehäuse (12) oberhalb oder in einem oberen Bereich des Aufnahmebehälters (24) angeordnetes Mahlwerk (40) mit wenigstens zwei relativ zueinander beweglichen Mahlelementen (42, 44), von denen wenigstens eines (42) vermittels des Stabelements (26, 46) relativ zu wenigstens einem anderen der Mahlelemente (44) verdrehbar ist;
**dadurch gekennzeichnet, dass**
das Gehäuse (12) einen Haltebereich (22) in Form einer Gehäuseverengung aufweist, die in einem mittleren Axialbereich des Gehäuses (12) oberhalb des Aufnahmebehälters (24) angeordnet und derart ausgestaltet ist, dass die Mühle (10) an der Gehäuseverengung einhändig greifbar und festhaltbar ist.

2. Mühle nach Anspruch 1, **dadurch gekennzeichnet, dass** der obere Gehäuseteil (14) den Haltebereich (22) einstückig aufweist oder dass der obere Gehäuseteil (14) mehrteilig ausgeführt ist, vorzugsweise mit einem oberen Vorratsbehälterteil (18a) und einem unteren Haltebereichsteil (22a).

3. Mühle nach Anspruch 2, **dadurch gekennzeichnet, dass** der Haltebereich (22) einen unteren Abschnitt (22a) des Vorratsbehälters (12) bildet oder zwischen dem Aufnahmebehälter (24) und dem Vorratsbehälter (18a) angeordnet ist.

4. Mühle nach einem der Ansprüche 1 bis 3, **dadurch gekennzeichnet, dass** das Mahlwerk (40) in axialer Richtung im Wesentlichen innerhalb des mittleren Axialbereichs im Gehäuseinneren oder anschließend an den mittleren Axialbereich im Aufnahmebehälter (24) angeordnet ist.

5. Mühle nach einem der Ansprüche 1 bis 4, **dadurch gekennzeichnet, dass** der obere Gehäuseteil (14) und der untere Gehäuseteil (16) miteinander gekoppelt oder koppelbar sind, vorzugsweise durch eine gewindeartige Verbindung oder einen Bajonettverschluss (60).

6. Mühle nach Anspruch 5, **dadurch gekennzeichnet, dass** der untere Gehäuseteil (16) den Aufnahmebehälter (24) bildet.

7. Mühle nach einem der vorhergehenden Ansprüche, **dadurch gekennzeichnet, dass** der Haltebereich (22) auf seiner Außenoberfläche derart ausgebildet ist, vorzugsweise durch eine Profilierung des Haltebereichs oder durch eine Beschichtung insbesondere mit einem Elastomer, dass die Mühle (10) im Wesentlichen rutschfest ergreifbar und festhaltbar ist.

8. Mühle nach einem der vorhergehenden Ansprüche, gegebenenfalls nach Anspruch 2, **dadurch gekennzeichnet, dass** der Vorratsbehälter (18), insbesondere der Vorratsbehälterteil 18a, aus einem durchsichtigen oder halbdurchsichtigen Material, vorzugsweise einem Kunststoff, hergestellt ist.

9. Mühle nach einem der vorhergehenden Ansprüche, **dadurch gekennzeichnet, dass** das Gehäuse (12) bezogen auf die Drehachse (D) im Wesentlichen rotationssysmmetrisch ausgeführt ist.

10. Mühle nach Anspruch 9, **dadurch gekennzeichnet, dass** der obere Gehäuseteil (18a) einen über seine axiale Erstreckung sich kontinuierlich verändernden Durchmesser bezogen auf die Drehachse (D) aufweist.

11. Mühle nach Anspruch 10, **dadurch gekennzeichnet, dass** der Durchmesser des oberen Gehäuseteils (18a) ausgehend von einem maximalen Durchmesser (DVₘₐₓ) in einem oberen Gehäusebereich in Richtung zur Gehäuseverengung (22) abnimmt und kontinuierlich in einen sich verändernden Durchmesser im Bereich der Gehäuseverengung (22) übergeht.

12. Mühle nach einem der Ansprüche 9 bis 11, **dadurch gekennzeichnet, dass** der untere Gehäuseteil (24) einen über seine axiale Erstreckung sich kontinuierlich verändernden Durchmesser bezogen auf die Drehachse (D) aufweist.

13. Mühle nach Anspruch 12, **dadurch gekennzeichnet, dass** der Durchmesser des unteren Gehäuseteils (24) ausgehend von einem maximalen Durchmesser (DAₘₐₓ) in einem unteren Gehäusebereich in Richtung zur Gehäuseverengung (22) abnimmt und kontinuierlich in einen sich verändernden Durchmesser im Bereich der Gehäuseverengung (22) übergeht.

14. Mühle nach Anspruch 13, **dadurch gekennzeichnet, dass** der Durchmesser des unteren Gehäuseteils (24) ausgehend von seinem maximalen Durchmesser (DAₘₐₓ) in Richtung zu einem Boden (64) des unteren Gehäuseteils (24) abnimmt.

15. Mühle nach Anspruch 11 und 13, **dadurch gekennzeichnet, dass** der sich verändernde Durchmesser im Bereich der Gehäuseverengung (22, 22a) bezogen auf die Drehachse ausgehend von einem Minimaldurchmesser (Dₘᵢₙ) sowohl in Richtung zum oberen Gehäuseteil (18a), als auch in Richtung zum unteren Gehäuseteil (24) kontinuierlich zunimmt.

16. Mühle nach dem Oberbegriff von Anspruch 1 oder nach einem der vorhergehenden Ansprüche,
**dadurch gekennzeichnet, dass**
der Deckel (20) derart ausgebildet ist, dass das Stabelement (26, 54, 56) bezüglich des Gehäuses (12) in radialer Richtung zur Drehachse (D) durch den Deckel (20) abgestützt oder abstützbar ist, wobei der Deckel (20) eine Durchgangsöffnung (19, 21) für das Stabelement (26, 54, 56) aufweist, durch die das Stabelement radial im Wesentlichen spielfrei gelagert oder lagerbar ist.

17. Mühle nach Anspruch 16, **dadurch gekennzeichnet, dass** der Deckel (20) an seinem Umfang an dem oberen Gehäuseteil (14, 18a) radial und in der zum Mahlwerk (40) weisenden Richtung axial abgestützt oder abstützbar ist.

18. Mühle nach einem der Ansprüche 1 bis 17, **dadurch gekennzeichnet, dass** der Deckel (20) aus einem Metall, insbesondere Edelstahl, hergestellt ist.

19. Mühle nach dem Oberbegriff von Anspruch 1 oder nach einem der vorhergehenden Ansprüche,
**dadurch gekennzeichnet, dass**
das Stabelement (26) einen mit der Kurbel (28) verbundenen Stababschnitt (56, 54) aufweist, der lösbar mit einem mit dem Mahlwerk verbundenen Stababschnitt (46) drehfest gekoppelt oder koppelbar ist.

20. Mühle nach Anspruch 19, **dadurch gekennzeichnet, dass** der mit der Kurbel (28) verbundene Stababschnitt (56, 54) auf den mit dem Mahlwerk verbundenen Stababschnitt (46) aufsteckbar ist, wobei die beiden Stababschnitte vorzugsweise miteinander in lösbarem Verrastungseingriff stehen.
